# EUROPÄISCHE PATENTANMELDUNG

(11) **EP 2 487 021 A2**
(43) Veröffentlichungstag der Anmeldung: **15.08.2012**
(21) Anmeldenummer: 12154753.3
(22) Anmeldetag: 09.02.2012
(51) Int. Cl.: B29C 45/17, F16L 3/26, B29C 33/00

(54) **Vorrichtung zur Abdeckung und Befestigung von Leitungen in Werkzeugen**

(30) Priorität: 09.02.2011 DE 202011002519 U
(71) Anmelder: Ziegler, Sven, 73095 Albershausen (DE)
(72) Erfinder: Ziegler, Sven, 73095 Albershausen (DE)
(74) Vertreter: Fürst, Siegfried

(57) **Zusammenfassung**

Die Erfindung betrifft eine Vorrichtung zur Abdeckung und Befestigung von Leitungen, wie Kabel und Schläuche, in Spritzgießwerkzeugen oder dergleichen Werkzeugen, in denen Kabel und Schläuche für elektrische, elektronische, hydraulische oder pneumatische Leitungsführungen zu verlegen sind, wobei mindestens ein Klemmelement zur Abdeckung und Befestigung von Leitungen in einer Ausnehmung eines Werkzeuges einlegbar ist, derart, dass das Klemmelement durch eine Drehbewegung elastisch so verformbar ist, dass es mit seinen Anlageflächen in längs der Ausnehmung beidseitig angeordneten Aussparungen kraftschlüssig zum Verschließen der Ausnehmung befestigt und wieder lösbar zum Öffnen der Ausnehmung gehalten ist.

## Beschreibung

Die Erfindung betrifft eine Vorrichtung zur Abdeckung und Befestigung von Leitungen nach dem Oberbegriff des Anspruches 1. Das bevorzugte Anwendungsgebiet der Erfindung ist die Abdeckung und Befestigung von Leitungen, wie Kabel und Schläuche, in Spritzgießwerkzeugen oder dergleichen Werkzeuge, wie Druckgieß-oder Strangpresswerkzeuge, Vakuumformen, Schnitt-, Biege- oder Vorrichtungswerkzeuge, in denen Kabel und Schläuche für elektrische, elektronische, hydraulische oder pneumatische Leitungsführungen verlegt werden müssen.

Derartige beheizbare Formen in Spritzgießmaschinen sind aus dem Stand der Technik u.a. zum Einsatz beim Gießen von Bauteilen aus Kunststoff, Metall oder anderen Leichtbauwerkstoffen bekannt, wobei speziell die Temperaturentwicklung des Bauteils im Gießprozess für eine bessere Formbarkeit und Gefügebildung einer Bauteilgeometrie sehr wichtig ist. Induktiv beheizbare Formen sind allgemein bekannt, so wird in der DE 199 50 037 C2 ein Verfahren und eine Vorrichtung zum Urformen eines Werkstoffes beschrieben, bei denen während eines Einfüllvorgangs und/oder während des Urformvorganges und/oder bei einer Nachbehandlung an Teilen der Urformvorrichtung eine konduktiv erzeugte Spannung derart angelegt wird, dass ein geschlossener Stromkreislauf gebildet wird und dem Metall konduktiv Wärmeenergie zugeführt wird. Weiterhin wird in der DE 10 2009 008 675 A1 eine Form zum Gießen eines Bauteils sowie ein Verfahren zur Herstellung einer derartigen Form beschrieben, mit mindestens einer Abdeckung mit einem formgebenden Konturelement, einer das Konturelement abstützenden Hinterfüllung und einer in die Hinterfüllung eingebrachten Temperiereinheit. Die Temperiereinheit besteht dabei insbesondere aus einem ersten Kanal zur Erwärmung und einem zweiten Kanal zur Kühlung des formgebenden Konturelementes.

Ausgehend von diesem Stand der Technik liegt der Erfindung die Aufgabe zugrunde, eine Vorrichtung zur Abdeckung und Befestigung von Leitungen, wie Kabel und Schläuche, in Spritzgießwerkzeugen oder dergleichen Werkzeugen zu schaffen, bei denen wenigstens eine zur Aufnahme der Leitungen vorgesehene Ausnehmung, z.B. ein Schacht bzw. ein Kanal, in einfacher Art und Weise derart abgedeckt wird, dass sowohl ein Herausfallen der Kabel und/oder Schläuche verhindert wird, als auch zum Auswechseln der Kabel und/oder Schläuche der betreffende Schacht bzw. Kanal einfach wieder zu öffnen ist.

Zur Lösung dieser Aufgabe schlägt die Erfindung eine Vorrichtung mit den Merkmalen des Patentanspruches 1 vor; die nachgeordneten Schutzansprüche offenbaren weitere Ausführungen der Erfindung.

Bei der Vorrichtung nach der Erfindung zur Abdeckung und Befestigung von Leitungen, wie Kabel und/oder Schläuche, in Spritzgießwerkzeugen oder dergleichen Werkzeuge, in denen Kabel und/oder Schläuche für elektrische, elektronische, hydraulische oder pneumatische Leitungsführungen zu verlegen sind, ist mindestens ein Klemmelement zur Abdeckung und Befestigung von Leitungen in wenigstens einer in einem Werkzeug angeordneten Ausnehmung derart einlegbar, dass dieses speziell gestaltete Klemmelement durch eine Drehbewegung elastisch so verformbar ist, dass es mit seinen Anlageflächen in längs der Ausnehmung beidseitig angeordneten Aussparungen kraftschlüssig zum Verschließen der Ausnehmung befestigt und wieder lösbar zum Öffnen der Ausnehmung gehalten ist. Die Ausnehmung ist vorzugsweise ein u-förmiger Schacht oder Kanal. Die Leitungen sind vorzugsweise aus flexiblem oder festem, biegbaren Material.

Je nachdem, wie lang eine Ausnehmung, also der Schacht oder der Kanal ist, werden zur Abdeckung und Befestigung der Leitungen in der betreffenden Ausnehmung ein oder mehrere Klemmelemente verwendet. Dabei muss die Ausnehmung nicht über ihre gesamte Länge verschlossen sein. Abhängig von der Art und/oder der Anzahl der Leitungen ist auch ein partielles Verschließen der Ausnehmung ausreichend.

Vorteilhaft ist, dass das Klemmelement als flaches, plattenförmiges, elastisches Abdeckelement ausgebildet ist, wobei das Klemmelement in Richtung einer im Klemmelement schlitzartig eingebrachten Pfeilnut drehbar und mittels der Pfeilnut und einer im Abstand zu der Pfeilnut schlitzartig ausgebildeten Quernut durch Drehung in Pfeilrichtung elastisch verformbar ist. Weitere Details zur Form des neuen Klemmelementes folgen weiter hinten.

Der Umriss des vorzugsweise als flaches Blechelement ausgebildeten Klemmelementes ist so ausgebildet , dass das Klemmelement nach dem Einlegen in den Schacht bzw. Kanal auf den Grundflächen der Aussparungen im Schacht bzw. Kanal aufliegt und mit seinen Anlageflächen an den Seitenwänden der Aussparungen anliegt und so mit Abstand zur Grundfläche des Schachtes gehalten ist. In dieser Lage deckt das Klemmelement die in dieser Ausnehmung angeordneten Kabel und/oder Schläuche somit ab. Nach dem, vorzugsweise partiellen, Verschließen des Schachtes mittels wenigstens einem Klemmelement ist durch Drehen des Klemmelementes entgegen der Pfeilrichtung jede Klemmverbindung wieder lösbar und das betreffende Klemmelement aus dem Schacht herausnehmbar.

Der Vorteil der vorliegenden Erfindung liegt darin, dass sich das Klemmelement nach dem Einlegen in den Schacht einfach und sicher durch Drehung in Pfeilrichtung in seiner Körperebene derart elastisch verformt, dass es mit seinen zwei Anlagenflächen fest an den Seitenflächen der Aussparungen des Schachtes anliegt und damit den Schacht, zumindest partiell, verschließt und gleichzeitig die Lage der Kabel und Schläuche gleichmäßig und im wesentlichen ebenflächig abdeckt.
Durch Drehen des Klemmelementes entgegen der Pfeilrichtung ist die Klemmverbindung schnell wieder lösbar und das Klemmelement aus der Ausnehmung herausnehmbar, so dass eine schnelle Montage und Demontage erfolgt.

Das Klemmelement ist durch seine einfache Formgestaltung universell sowohl für unterschiedliche Werkzeuge als auch für Kabelschächte unterschiedlicher Breiten einsetzbar. Je nach Größe des Werkzeuges sind auch mehrere Klemmelemente in die Ausnehmung, den Schacht bzw. den Kanal, einsetzbar. Ebenso können die in den Seitenwänden der Ausnehmung angeordneten Aussparungen je nach Ausbildung der verwendeten Werkzeuge und des dadurch ausgebildeten Schachtes bzw. Kanals unterschiedliche Ausführungen aufweisen.

Alternativ ist vorgesehen, dass an dem Klemmelement ein Niederhalter in Form einer Bürste angeordnet ist, so dass das Klemmelement gleichzeitig zur Abdeckung und Befestigung der in der Ausnehmung, dem Schacht bzw. dem Kanal, angeordneten Kabel und/oder Schläuche dient, indem es die Kabel und/oder Schläuche in der Ausnehmung festdrückt und diese in der vorgegebenen Lage fixiert. Der Niederhalter kann auch je nach Einsatzgebiet in den unterschiedlichen Werkzeugarten auch als selbständiges Bauelement ausgebildet und in dem entsprechen Schacht bzw. Kanal unter dem Klemmelement angeordnet sein.

Die Erfindung wird folgend anhand von schematisch in Zeichnungen dargestellten Ausführungsbeispielen näher erläutert.

Es zeigen:
- Fig. 1: ein Klemmelement zur Abdeckung von Leitungen nach der Erfindung in Ausgangsstellung;
- Fig. 2: das Klemmelement zur Abdeckung von Leitungen nach Figur 1 in Klemmstellung;
- Fig. 3: das Klemmelement zur Abdeckung von Leitungen nach Figur 1 in Detailansicht;
- Fig. 4: ein Ausführungsbeispiel des Klemmelementes zur Abdeckung und Befestigung von Kabeln und Schläuchen
- und Fig. 5: eine Perspektiv-Ansicht auf ein Werkzeug, bei dem Leitungen mit einem Klemmelement nach der Erfindung gehalten sind.

Für die erfindungsgemäße Vorrichtung ist nach der Erfindung ein neues, speziell gestaltetes Abdeckelement vorgesehen, ein Klemmelement 1.

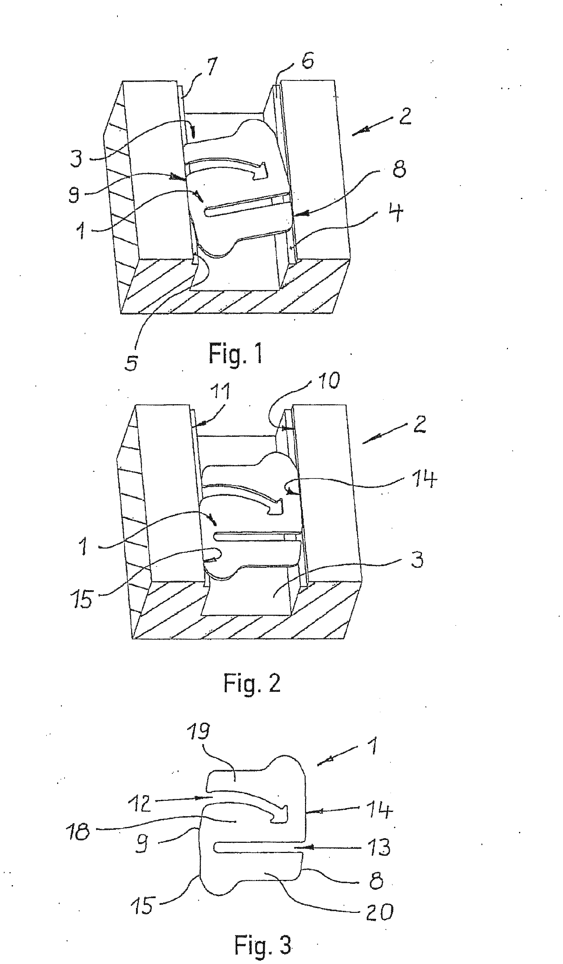

Die Figur 3 zeigt dieses erfindungsgemäße Klemmelement 1 in einer Draufsicht, welches als flaches, plattenförmiges, elastisches Formteil ausgebildet ist. Dieses Formteil geht aus von einem im Wesentlichen rechteckigen Grundriss/Umriss. Von zwei einander gegenüber liegenden Seitenflächen seines Körpers aus ist jeweils ein lang gestreckter spaltförmiger oder nutförmiger, die Oberfläche und die Unterfläche des Grundkörpers durchgreifender Einschnitt angeordnet, die Pfeilnut 12 und die Quernut 13. Hierdurch ist ein im Wesentlichen Z-förmiger Körper gebildet, mit einem Mittelteil 18 und einem oberen Außenglied 19 - bezüglich der Darstellung in Figur 3 gesehen - und einem unteren Außenglied 20.

Das obere Außenglied 19 ist mit dem Mittelteil 18 einseitig verbunden, also einstückig. An dem betreffenden Teilabschnitt der Seitenfläche des Klemmelementes 1 ist eine zweite Anlagefläche 14 ausgebildet. Das untere Außenglied 20 ist auf der gegenüber liegenden Seite des Mittelteils 18 mit diesem einseitig verbunden, also auch einstückig mit dem Mittelteil 18. An diesen Teilabschnitt der Seitenfläche des Klemmelementes 1 ist oberhalb der Quernut 13 eine erste Anlagefläche 9 ausgebildet und unterhalb der Quernut 13 eine zweite Anlagefläche 15. An der gegenüber liegenden Seitenfläche des unteren Außengliedes 20, also an seinem freien Ende, ist eine erste Anlagefläche 8 ausgebildet. Quasi liegt also jeder Anlagefläche 8 bzw. 9 erster Art eine Anlagefläche 15 bzw. 14 zweiter Art mit Abstand zueinander gegenüber. Wobei die einander gegenüber liegende erste Anlagefläche 8 und die zweite Anlagefläche 15 bzw. die erste Anlagefläche 9 und zweite Anlagefläche 14 nicht parallel zueinander liegend am Körper angeordnet sind. Vorzugsweise ist jede erste Anlagefläche 8 und 9 spitzwinklig zur Quernut 13 liegend angeordnet.

Der Umriss des Klemmelementes 1 ist auch so ausgebildet, dass die zweiten Anlageflächen 14, 15 zueinander parallel und mit Abstand angeordnet sind, wobei die zweiten Anlageflächen 14, 15 im Wesentlichen rechtwinklig zu der Quernut 13 angeordnet sind.

Diese Gestaltung der Form des Klemmelementes gewährleistet das elastische Verformen des Klemmelementes 1 einerseits und andererseits einen festen Sitz in Einbaulage in der Ausnehmung 3.

Die Begriffe "Pfeilnut" und "Quernut" für die beiden lang gestreckten, nutförmigen Einschnitte mit dem Bezugszeichen 12 bzw. 13 sind zunächst zur sprachlichen Unterscheidung dieser beiden, jeweils in Details unterschiedlich gestalteten Einschnitte verwendet. Der lang gestreckte, nutförmige Einschnitt 12 ist in seinem Nutgrund pfeilförmig gestaltet, sodass hier der Zusatz "Pfeil" zur Unterscheidung zweckdienlich ist. Zudem ist die Gestaltung dieses Einschnittes als "Pfeil" auch eine optische Orientierungshilfe für den Bediener des Werkzeuges beim Einlegen und Klemmen des Klemmelementes 1 in der Ausnehmung 3. Der Zusatz "Quer" für die Bezeichnung des lang gestreckten, nutförmigen Einschnitts 13 wurde gewählt, da die Quernut 13 in Einbaulage des Klemmelementes 1 quer zur Ausnehmung 3 liegt.

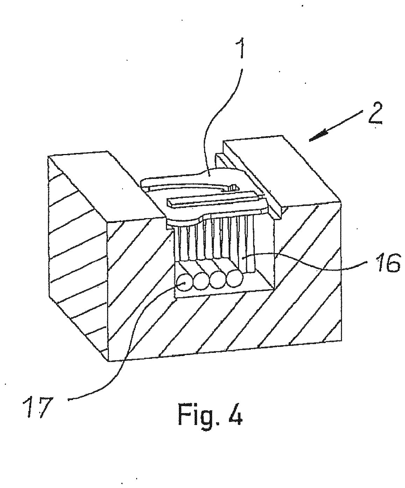

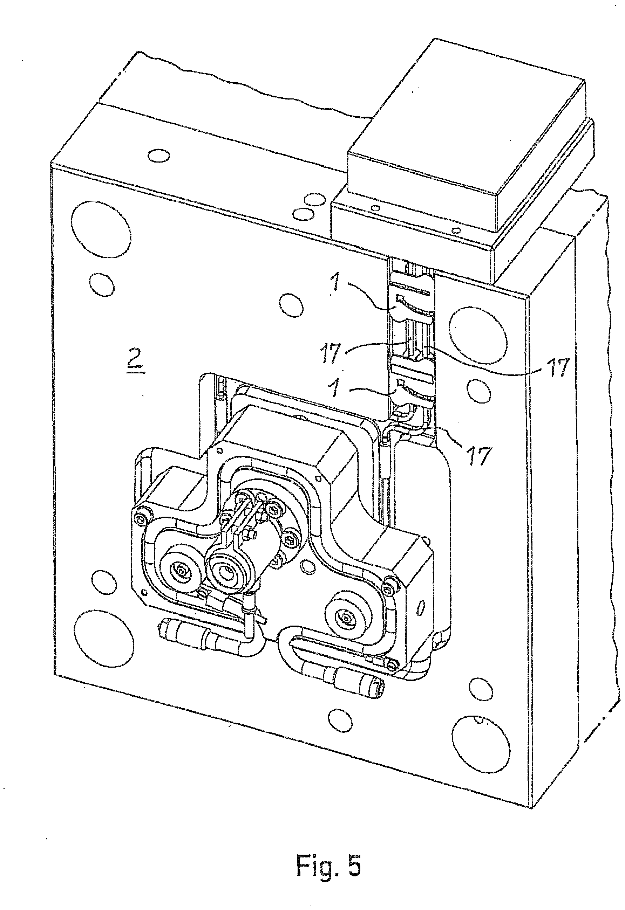

Dieses Klemmelement 1 dient zur Abdeckung von einem oder mehreren als Kabel und Schläuche vorgesehenen Leitungen 17 in einer Ausnehmung, hier einem Schacht 3 eines nicht näher dargestellten Werkzeuges 2, beispielsweise einer Druckgussform eines Spritzgießwerkzeuges (die Figuren 1, 2 und 4 zeigen einen Ausschnitt des Werkzeuges 2). In dem Werkzeug 2 ist ein Schacht/Kanal 3 angeordnet, in dem die Kabel und/oder Schläuche 17 beispielsweise zum Beheizen des Druckgusswerkzeuges angeordnet sind, s. Figur 4 und Figur 5.

Das Klemmelement 1 ist zum Verschließen des Schachtes 3 und damit zur Abdeckung der Kabel und/oder Schläuche 17 in im oberen Bereich des Schachtes 3 parallel mit Abstand gegenüberliegende Aussparungen 4, 5 derart einlegbar, dass das Klemmelement 1 in den Aussparungen 4, 5 kraftschlüssig befestigbar und zum Öffnen wieder lösbar gehalten ist.

In einem ersten Schritt wird das Klemmelement 1 in die Ausnehmung 3 eingelegt. Das Klemmelement 1 liegt dabei, nach dem Einlegen in den Schacht 3, auf Grundflächen 6, 7 der Aussparungen 4, 5, die im oberen Bereich des Schachtes 3 angeordnet sind auf und mit seinen ersten Anlageflächen 8, 9 an Seitenwänden 10, 11 der Aussparungen 4, 5 an. Dadurch wird es mit Abstand zur Grundfläche des Schachtes 3 gehalten.

In einem zweiten Schritt wird durch eine Drehbewegung des Klemmelementes 1 in Richtung einer im Klemmelement 1 schlitzartig eingebrachten Pfeilnut 12 entsprechend Figur 2 das Klemmelement 1 derart elastisch verformt, dass es mit seinen zweiten Anlagenflächen 14,15 fest an den Seitenflächen 10,11 der Aussparungen 4,5 des Schachtes 3 anliegt, also arretiert ist und damit den Schacht 3 verschließt, hier partiell, und die Kabel und/oder Schläuche 17 in ihrer Lage sichert. Dabei ragt das Klemmelement 1 nicht über die Oberfläche des Werkzeuges 2 heraus, bzw. biegt sich nicht abschnittsweise in den aufnehmenden Schacht/Kanal 3 hinein, wie es bei Klemmelementen nach dem Stand der Technik erfolgt, was zu einer Verringerung seines Querschnittes führen würde.

Die Aussparungen 4,5 im Schacht 3 können dazu je nach Einsatz des Klemmelementes 1 in den unterschiedlichen Werkzeugen auch unterschiedliche Formen und Abstände aufweisen.

Das erfindungsgemäße Klemmelement 1, das in unterschiedlichen Werkzeugen 2 für entsprechende Schächte / Kanäle 3 in unterschiedlichen Breiten einsetzbar ist, ermöglicht kurze Montage-und Demontagezeiten. Durch Drehen des Klemmelementes 1 entgegen der Pfeilrichtung 12 kann die Klemmverbindung schnell wieder gelöst und das Klemmelement 1 aus dem Schacht / Kanal 3 herausgenommen werden.

Dadurch, dass durch das flache, plattenförmig, elastisch ausgebildete Klemmelement 1 zur Abdeckung und Befestigung der Leitungen, vorzugsweise Kabel und/oder Schläuche 17 keine aufwendigen Schraubverbindungen benötigt werden, ist die Herstellung des auswechselbaren Klemmelementes 1 materialsparend und ermöglicht eine schnelle Montage und Demontage. Gleichzeitig ermöglicht der geringe Bauraum des Klemmelementes 1 einen besseren freien Leitungsverlauf.

Entsprechend Figur 4 ist an dem Klemmelement 1 ein Niederhalter 16 in Form einer Bürste angeordnet. Wenn das Klemmelement 1 im Schacht 3 geklemmt gehalten ist, drückt der Niederhalter 16 auf die im Schacht angeordneten Kabel und/oder Schläuche 17 und fixiert diese zusätzlich in der vorgegebenen Lage. Damit kann neben der Funktion der Abdeckung auch eine Befestigung der Kabel und/oder Schläuche 17 realisiert werden. Der Niederhalter 16 ist auch als selbständiges Bauteil ausgebildet und in den Schacht/Kanal 3 einlegbar.

Die vorliegende Erfindung beschränkt sich nicht auf die Ausführungsbeispiele. Sie umfasst insbesondere auch Varianten, die durch Kombination von in Verbindung mit der vorliegenden Erfindung beschriebenen Merkmale bzw. Elementen gebildet werden können. Eine solche Variante der Erfindung besteht darin, dass in dem Klemmelement 1 statt einer mehrere Quernuten 13 vorgesehen sind, die einseitig oder beidseitig der Pfeilnut 12 angeordnet sind.

### Bezugszeichenliste

- 1: Klemmelement
- 2: Werkzeug
- 3: Ausnehmung (Schacht/Kanal u. dgl. )
- 4: Aussparung (in Pos. 3)
- 5: Aussparung (in Pos. 3)
- 6: Grundfläche der Aussparung
- 7: Grundfläche der Aussparung
- 8, 9: erste Anlageflächen des Klemmelementes
- 10: Seitenfläche der Aussparung
- 11: Seitenfläche der Aussparung
- 12: Pfeilnut (spaltförmiger oder nutförmiger Einschnitt)
- 13: Quernut (spaltförmiger oder nutförmiger Einschnitt)
- 14, 15: zweite Anlageflächen des Klemmelementes
- 16: Niederhalter
- 17: Leitungen (Kabel und Schläuche)
- 18: Mitteilteil
- 19: oberes Außenglied
- 20: unteres Außenglied

## Patentansprüche

1. Vorrichtung zur Abdeckung und Befestigung von Leitungen, wie Kabel und Schläuche, in Spritzgießwerkzeugen oder dergleichen Werkzeugen, in denen Kabel und Schläuche für elektrische, elektronische, hydraulische oder pneumatische Leitungsführungen zu verlegen sind,
**dadurch gekennzeichnet,**
**dass** mindestens ein Klemmelement (1) zur Abdeckung und Befestigung von Leitungen (17) in einer Ausnehmung (3) eines Werkzeuges (2) einlegbar ist, derart, dass das Klemmelement (1) durch eine Drehbewegung elastisch so verformbar ist, dass es mit seinen Anlageflächen (14, 15) in längs der Ausnehmung (3) beidseitig angeordneten Aussparungen (4, 5) kraftschlüssig zum Verschließen der Ausnehmung (3) befestigt und wieder lösbar zum Öffnen der Ausnehmung (3) gehalten ist.

2. Vorrichtung nach Anspruch 1,
**dadurch gekennzeichnet,**
**dass** das Klemmelement (1) als flaches, plattenförmiges, elastisches Abdeckelement ausgebildet ist, wobei das Klemmelement (1) in Richtung einer im Klemmelement (1) schlitzartig eingebrachten Pfeilnut (12) drehbar und mittels der Pfeilnut (12) und einer im Abstand zu der Pfeilnut (12) schlitzartig ausgebildeten Quernut (13) elastisch verformbar ist.

3. Vorrichtung nach Anspruch 1 oder 2,
**dadurch gekennzeichnet,**
**dass** das Klemmelement (1) nach dem Einlegen in die Ausnehmung (3) auf Grundflächen (6, 7) der Aussparungen (4, 5) in der Ausnehmung (3) aufliegt und mit seinen Anlageflächen (8, 9) an Seitenwänden (10, 11) der Aussparungen (4, 5) anliegt, wobei das Klemmelement (1) mit Abstand zur Grundfläche der Ausnehmung (3) gehalten ist.

4. Vorrichtung nach einem der Ansprüche 1 bis 3,
**dadurch gekennzeichnet,**
**dass** sich das Klemmelement (1) durch Drehung in Pfeilrichtung (12) derart elastisch verformt, dass es mit seinen Anlagenflächen (14, 15) fest an den Seitenflächen (10, 11) der Aussparungen (4, 5) der Ausnehmung (3) anliegt.

5. Vorrichtung nach einem der Ansprüche 1 bis 4,
**dadurch gekennzeichnet,**
**dass** nach dem Verschließen der Ausnehmung (3) mittels des Klemmelementes (1) durch Drehen des Klemmelementes (1) entgegen der Pfeilrichtung (12) die Klemmverbindung wieder lösbar und das Klemmelement (1) aus der Ausnehmung (3) herausnehmbar ist.

6. Vorrichtung nach einem der Ansprüche 1 bis 5,
**dadurch gekennzeichnet,**
**dass** das Klemmelement (1) als flaches, plattenförmiges Blechelement ausgebildet ist.

7. Vorrichtung nach einem der Ansprüche 1 bis 6,
**dadurch gekennzeichnet,**
**dass** an dem Klemmelement (1) ein Niederhalter (16) in Form einer Bürste angeordnet ist, der auf die in der Ausnehmung (3) angeordneten Leitungen, Kabel und Schläuche (17) drückt und diese in der vorgegebenen Lage fixiert.

8. Vorrichtung nach Anspruch 7,
**dadurch gekennzeichnet,**
**dass** der Niederhalter (16) als selbständiges Bauelement ausgebildet und in die Ausnehmung (3) einlegbar ist.

9. Vorrichtung nach Anspruch 1,
**dadurch gekennzeichnet,**
**dass** ein oder mehrere Klemmelemente (1) jeweils derart in einer Ausnehmung (3) angeordnet sind, dass selbige (3) partiell verschlossen ist.
